# EUROPEAN PATENT APPLICATION

(11) **EP 4 764 415 A1**
(43) Date of publication of application: **24.06.2026**
(21) Application number: 24220816.3
(22) Date of filing: 17.12.2024
(51) Int. Cl.: G01C 21/34

(54) **METHOD, APPARATUS AND COMPUTER PROGRAM FOR SEARCHING ALONG A ROUTE**

(71) Applicant: TomTom Navigation B.V., 1011 AC Amsterdam (NL)
(72) Inventor: Chadha, Aditya Varun, 1011 AC Amsterdam (NL)
(74) Representative: Swindell & Pearson Limited

(57) **Abstract**

Certain examples of the present disclosure provide a method (100) for determining points of interest (200) along a route (400), the method comprising: determining (101) a first set of POIs (300), along a route, that meet one or more first criteria (500); partitioning (102) the route into a plurality of segments (700); associating (103) each one or more POIs of the first set of POls with one of the plurality of segments of the route; ranking (104) each one or more POIs of the first set of POIs, wherein the ranking is based at least in part on one or more second criteria (900); selecting (105), for each segment, a threshold number (N) of the highest ranking POIs associated with the respective segment; and generating a second set of POls based at least in part on the selected POIs.

## Description

### TECHNOLOGICAL FIELD

Examples of the present disclosure relate to a method, an apparatus and a computer program for searching along a route. Certain examples relate to a method, an apparatus and a computer program for determining Points of Interest, POIs, along a route.

### BACKGROUND

A digital map may comprise map data representative of navigable elements (not least for example roads), through which a route may be calculated. A digital map may also comprise map data representative of map features/locations of interest (referred to herein as Points of Interest, POIs). It is useful to determine/search for/identify POIs along a route, for example to determine locations/places that a user/driver may wish to go via, visit or stop at whilst traversing a route.

It is useful to provide an improved method, apparatus and computer program for determining POIs along a route.

The listing or discussion of any prior-published document or any background in this specification should not necessarily be taken as an acknowledgement that the document or background is part of the state of the art or is common general knowledge. One or more aspects/examples of the present disclosure may or may not address one or more of the background issues.

### BRIEF SUMMARY

The scope of protection sought for various exemplary embodiments is set out by the claims.

According to various, but not necessarily all, examples of the disclosure there are provided examples as claimed in the appended claims. Any examples and features described in this specification that do not fall under the scope of the independent claims are to be interpreted as examples useful for understanding various exemplary embodiments.

According to various, but not necessarily all, examples of the disclosure there is provided a computer-implemented method for determining points of interest, POIs, along a route, the method comprising:
determining a first set of POIs, along a route, that meet one or more first criteria;
partitioning the route into a plurality of segments;
associating each one or more POIs of the first set of POIs with one of the plurality of segments of the route;
ranking each one or more POIs of the first set of POIs, wherein the ranking is based at least in part on one or more second criteria;
selecting, for each segment, a threshold number of the highest ranking POIs associated with the respective segment; and
generating a second set of POIs based at least in part on the selected POIs.

According to at least some examples of the disclosure there is provided an apparatus comprising means for performing the above-mentioned method.

According to various, but not necessarily all, examples of the disclosure there is provided a module, chipset, circuitry, device, data processing apparatus and/or system comprising means for performing the above-mentioned method.

According to various, but not necessarily all, examples of the disclosure there is provided a computer program comprising instructions, which when executed by an apparatus, cause the apparatus to perform the above-mentioned method.

According to various, but not necessarily all, examples of the disclosure there is provided an apparatus comprising:
at least one processor; and
at least one memory storing instructions that, when executed by the at least one processor, cause the apparatus at least to perform the above-mentioned method.

According to various, but not necessarily all, examples of the disclosure there is provided a non-transitory computer readable medium encoded with instructions that, when executed by at least one processor, causes the above-mentioned method to be performed.

The following portion of this 'Brief Summary' section describes various features that can be features of any of the examples described in the foregoing portion of the 'Brief Summary' section mutatis mutandis. The description of a function should additionally be considered to also disclose any means suitable for performing that function, or any instructions stored in at least one memory that, when executed by at least one processor, cause an apparatus to perform that function.

In some but not necessarily all examples, determining the first set of POIs along the route that meet one or more first criteria comprises:
identifying POIs, positioned within a threshold distance from the route, that meet the one or more first criteria.

In some but not necessarily all examples, determining the first set of POIs along the route that meet one or more first criteria comprises:
inputting the one or more first criteria as a search query input to a Search Along Route, SAR, service for identifying POIs, along the route, that meet the one or more first criteria.

In some but not necessarily all examples, at least one of the one or more first criteria is at least one of:
based at least in part on a user input;
based at least in part on a context; or
predetermined.

In some but not necessarily all examples, at least one of the one or more first criteria is at least one of:
a POI category; or
a POI attribute.

In some but not necessarily all examples, each segment has a segment length, and wherein the lengths of the segments are at least one of:
predetermined;
substantially uniform;
user defined;
based at least in part on a user input;
based at least in part on a determined context; or
based at least in part on the one or more first criteria.

In some but not necessarily all examples, each segment has a segment length, and wherein the lengths of the segments are based at least in part on a range parameter, wherein the range parameter is indicative of at least one of:
a target threshold distance between POIs of the second set of POIs;
a maximum range of a vehicle; or
a target threshold estimated journey time for traversing between POIs of the second set of POIs.

In some but not necessarily all examples, the method further comprises determining information, or additional information, on:
one or more POIs of the first set of POIs, and/or
a subset of the first set of POIs.

In some but not necessarily all examples, at least one of the one or more second criteria is at least one of:
one or more criteria to be met by POIs of the second set of POIs;
user specified;
based at least in part on a user input;
based at least in part on a determined context;
based at least in part on a pre-determined preference of a user;
based at least in part on a user's history; and
predetermined.

In some but not necessarily all examples, the ranking of a POI is based at least in part on at least one of:
a distance to the POI from a point of a segment that is associated with the respective POI;
an estimated amount of time to travel to the POI from a point of a segment that is associated with the respective POI; or
a detour cost for the POI, wherein the detour cost for the POI is indicative of an estimated cost to traverse a second route, from a point of a segment that is associated with the respective POI, to the respective POI.

In some but not necessarily all examples, the method further comprises reducing a total number of POIs in the second set of POIs, wherein reducing the total number of POIs comprises iteratively removing a POI from the second set of POIs based at least in part on:
the POI being associated with a segment that has the most POIs associated therewith, and
a ranking of the POI.

In some but not necessarily all examples, one or more POIs are iteratively removed from the first or second set until a total number of POIs in the first or second set meets a threshold number of POIs.

In some but not necessarily all examples, the method further comprises at least one of:
rendering at least a portion of the second set of POIs, and optionally at least a portion of the route, on a digital map;
using at least a portion of the second set of POIs for a route calculation;
modifying the route to include one or more intermediate waypoints, wherein the intermediate waypoints comprise one or more POIs of the second set of POIs; or modifying the route to include, for at least one of the segments, at least one POI from the second set of the POIs as at least one waypoint.

While the above examples of the disclosure and optional features are described separately, it is to be understood that their provision in all possible combinations and permutations is contained within the disclosure. It is to be understood that various examples of the disclosure can comprise any or all of the features described in respect of other examples of the disclosure, and vice versa. Also, it is to be appreciated that any one or more or all of the features, in any combination, may be implemented by/comprised in/performable by an apparatus, a method, and/or computer program instructions as desired, and as appropriate.

### BRIEF DESCRIPTION OF THE DRAWINGS

Some examples will now be described with reference to the accompanying drawings in which:
Fig. 1 schematically shows a method in accordance with an example of the present disclosure;
Fig. 2 schematically shows an example of a route and a set of POIs along the route;
Fig. 3 schematically shows an example of the route of Fig. 2 split into segments and a set of POIs associated with each segment;
Fig. 4 schematically shows an example of a subset the set of POIs associated with each segment of Fig. 3;
Fig. 5 schematically shows a further example of a route with POIs associated with each segment of the route;
Fig. 6 schematically shows an example of an apparatus; and
Fig. 7 schematically shows an example of a computer program.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

In the drawings (and description) a similar feature may be referenced by the same three-digit number. In the drawings (and description), an optional subscript to the three-digit number can be used to differentiate different instances of similar features. Therefore, a three-digit number without a subscript can be used as a generic reference and the three-digit number with a subscript can be used as a specific reference. A subscript can comprise a single digit that labels different instances. A subscript can comprise two digits including a first digit that labels a group of instances and a second digit that labels different instances in the group.

### DETAILED DESCRIPTION

There now follows a brief discussion of "Searching Along Route" SAR, i.e. finding points/places/locations of interest (namely POIs) along a route.

SAR may have two "modes" of usage:
1. SAR Horizon Mode: this usage mode is for when a user is looking for upcoming potential intermediate stops/waypoints, i.e. POIs, along a route in the general direction of the user's destination that are reachable from the user's current position such that travel along the route can be resumed within a detour budget, i.e. such that the detour to reach the POI is within a particular range. In this context, a "detour" may be consider to relate to a sub-route, which departs from a main route, that may be taken to reach the POI/intermediate stop/waypoint near the main route. In this context, a "range" may be considered to relate to maximum distance that the user can travel to reach a potential intermediate stop/POI during a journey along the route. A SAR Horizon Mode type of usage may be provided via navigation device, such as an in-vehicle navigation device or a portable/handheld navigation device.
2. SAR Planning Mode: this usage mode is for when a user is "planning" stops at regular intervals along a (remaining) route. By way of an example, not least for instance:
   a) when planning Electric Vehicle, EV, charging stops every X kilometres along a route (wherein X may be based on a maximum range/mileage of an EV)
   b) when planning rest stops (such as comfort or toilet stops)
   c) when discovering scenic stops along a long route
   d) when planning stops that offer multiple collocated amenities (e.g. fuel and lunch)

Common to both these modes of usage of SAR is a notion of a 'range' (distance budget) that the user can tolerate from their current position, or from a location of interest to reach the next location of interest.

Depending on intent and context, the range/tolerable range may vary. For example,
- a driver of an EV with a nominal range of 400 km from 80% battery level may find a route tenable only if there are compatible charging stations every 300 km along the route.
- when travelling with children, one may prefer to plan rest stops every 200 km.

As will be set out in further detail below, examples of the present disclosure seek to provide improved SAR, not least for a Planning mode usage.

Examples of the present disclosure may seek to provide improved SAR that may provide a deterministic and optimally uniform spread of POI search results along a route.

Examples of the present disclosure may seek to provide search results of POIs along a route that can take into consideration: a user specifiable range and/or a range determined based at least in part on a context (e.g. searching while driving an electric vehicle). In some examples, when a range is not specified - either by the end user or by the context - an intent-adaptive default range and ranking mode may be used to determine parameters for governing a spread of the POI. For example, from a user POI search query "restroom", an intent "Rest area" may be recognized and accordingly a default range of 150 kilometres and a ranking mode "nearest by distance along route" may be applied.

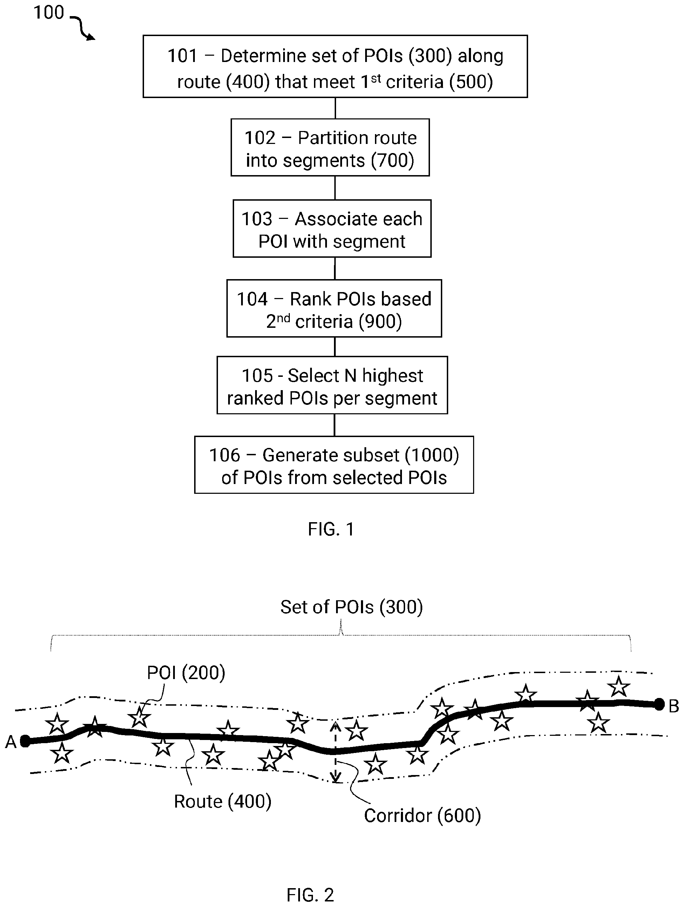

Fig. 1 schematically illustrates a method 100 (which may be computer-implemented) for searching for POIs along a route. The method of Fig. 1 is described below with reference, not least, to Figs. 2 to 4.

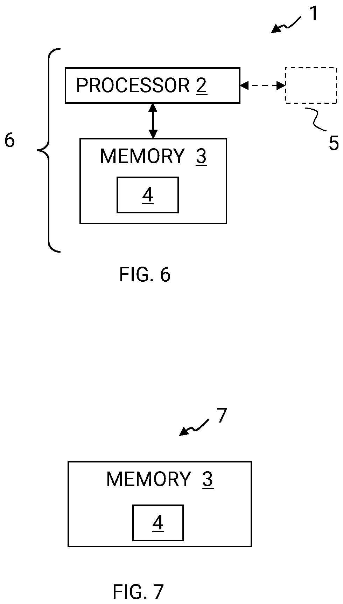

The component blocks of Fig. 1 are functional and the functions described can be performed by a single physical entity (such as an apparatus as described with reference to of Fig. 6, which may be implemented in a navigation device [for instance an in-vehicle navigation device or a portable/handheld navigation device], or in a server). The functions described can also be implemented by a computer program (such as is described with reference to Fig. 7).

The method/flowchart of Fig. 1 represents one possible scenario among others. The order of the blocks shown is not absolutely required, so in principle, the various blocks can be performed out of order. In certain examples one or more blocks can be performed in a different order or overlapping in time, in series or in parallel.

In block 101, a first set of POIs 300 is determined that:
i) are along a route 400 (i.e. a pre-determined/a pre-planned route), and which also
ii) meet one or more first criteria 500 (i.e. a further criteria in addition to being along the route).

Determining the first set of POIs along the route that meet one or more first criteria may comprise identifying POIs, positioned within a threshold distance from the route, that meet the one or more first criteria.

Such determination may comprise: receiving, obtaining, or calculating the first set of POIs via a Search Along Route, SAR, algorithm or service. In this regard, the determination of block 101 may comprise inputting the one or more first criteria as a search query input to a SAR service for identifying POIs, along the route, that meet the one or more first criteria.

The one or more first criteria may be:
based at least in part on a user input (e.g. explicitly input by a user or inferred based on a user query/POI search terms);
based at least in part on a context (such context including, not least for example being in an electric vehicle, a time [e.g. in relation to day/night/meal times] user/personal preferences); and/or
predetermined criteria.

The first criteria may correspond to a POI having a particular POI category (not least for example: EV charging station, restaurant ...) or a POI attribute (not least for example: connector type of EV chargers).

Fig. 2 schematically illustrates an example of:
a route 400, from an origin point "A" to a destination point "B", through a network of navigable elements; and
a first set of POIs 300 that are along the route (i.e. within a corridor/threshold separation distance/width 600 from the route) and which meet a first criteria.

For the sake of simplicity, other navigable elements (e.g. those branching off or intersecting the navigable elements that form the route 400) are not shown. Likewise, other POIs (i.e. other POIs of a digital map) that are not along the route (i.e. not within the corridor 600) and/or which do not meet the first criteria are not shown.

The route 400 may be a pre-determined/pre-planned route.

The first set of POIs 300, can be considered to be a set of POIs 300 that are associated with the entire route. The first set of POIs effectively correspond to a subset of a global set of POIs of a digital map - such a subset/first set being formed of POIs from the global set which are along the route and moreover which meet the first criteria.

As will be appreciated, each POI 200 may be representative of any type of map features/objects/locations/places or points - for instance, not least by way of a non-limiting example:
EV charging stations, petrol stations, service stations, rest stops, toilet facilities, restaurants, cafes, pubs, shops, accommodation, hotels, tourist attractions, landmarks, scenic stops, buildings ... etc.

Each POI 200 may have a position/location.

A POI may be determined to be 'along the route' if a location of the POI is within a threshold distance from the route, for instance within a certain separation distance, width or corridor 600 from the route. The "distance" of a POI from the route may be considered to be:
a "spatial" distance, e.g. a direct/straight line displacement distance of a POI with respect the route, or a 'travel distance' representing a distance along navigable elements to traverse between the POI and the route;
a "temporal" distance, e.g. a 'travel time' representing an expected amount of time to traverse along navigable elements (i.e. at expected speeds for the navigable elements) between the POI and the route.

Each POI may have one or more characteristics or attributes. The one or more first criteria may be based on whether a POI has one or more particular characteristics or attributes.

A POI may be determined to meet the one or more first criteria if the respective POI has one or more particular characteristics or attributes specified by one or more first criteria. In this regard, the one or more first criteria specify one or more matching criteria, moreover such matching criteria can effectively be considered to be "hard" criteria that must be met (as compared to the below discussed second criteria which can effectively be considered to be "soft" criteria that it is preferred/optional to be met). By way of an example, a first criteria may be that each POI must be an EV charging facility and moreover that it must also have EV charging facilities that compatible with the user/driver's electric car. Such a first criteria may be input search query terms for a POI SAR service.

POI data, stored in a database/repository of POI data or comprised in a digital map stored in a map database, may comprise information representative of each POI and additional information related to each POI, not least such as a location/position of each POI and one or more characteristics or attributes of each POI.

In block 102, the route 400 is partitioned into a plurality of segments 700.

The length of each route segments may be:
predetermined;
substantially uniform;
user defined/based at least in part on a user input;
based at least in part on a determined context (for instance, where the context is that the user's vehicle is an EV, the length of a route segment could be based on the EV's range); or
based at least in part on the one or more first criteria (for instance, where the first criteria is POIs that are EV charging locations, the length of a route segment could be based on the EV's range).

In block 103, each POI of the first set of POIs 300 is associated with one of the plurality of segments of the route. In this regard, a set of POIs 800 may be formed for each route segment 700. In some examples, each POI may be assigned/associated to its nearest route segment and/or the route segment associated with a corridor segment within which the POI is located.

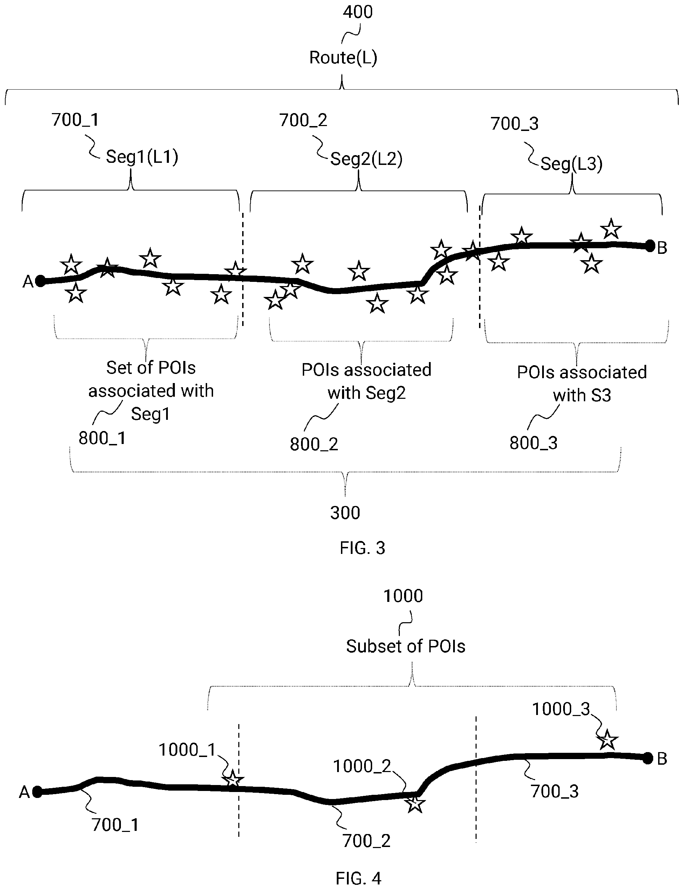

Fig. 3 schematically illustrates an example of the route 300 of Fig.2 partitioned into a plurality of segments 700 (namely, in this particular example, 3 segments: 700_1, 700_2 and 700_3 - referred to herein as segments: Seg1, Seg2 and Seg3). Fig. 3 also schematically illustrates sets of POIs 800 that are respective associated with the segments 700 (namely, in this particular example, 3 sets of POIs: 800_1, 800_2 and 800_3 respectively associated with Seg1, Seg2 and Seg3). Each set of POIs 800 associated with a segment is a subset of the first set of POIs 300 associated with the whole of the length of the route 300.

In the example of Fig. 3, the route 20 - which has a length L - is partitioned/split into 3 segments Seg1, Seg2 and Seg3 each having respective segment lengths L1, L2 and L3.

The length of each segment of the route may be based, at least in part, on a range parameter or a predetermined distance. Such a range or pre-determined distance may comprise a target threshold distance (e.g. maximum distance) that a user would wish to travel between POIs (e.g. from one POI to another POI, or from a current position to a next POI). Such a range or pre-determined distance may be referred to herein as a 'distance budget'. In this regard, as will be discussed further below, the length of each segment effectively serves as a maximum distance that the user is willing to travel to reach a/the next POI, or a maximum journey time that the user is willing to travel for reach a/the next POI.

By way of an example, a user may be driving an Electric Vehicle, EV, that has a range of 300km. In which case, the route segment length may be calculated as a percentage of the range, e.g. 80% of 300km = 240km.

In some examples, the length of each segment of the route could be the same/substantially the same. In some examples, the route segments could have differing lengths (e.g. differing user defined lengths that may correspond to user defined legs of the journey along the route).

In some examples, the majority of the segments may have the same/substantially the same length and a minority one or more (e.g. an end segment) may have a differing length (such as a 'remainder length' - for instance if the route were 700km long, Seg1 and Seg 2 may have segment lengths 240km, whilst Seg3 may have the remainder length 220km)

It is to be appreciated that, in some examples, block 102 could be performed prior to block 101. In this regard, rather than:
determining a set of POIs for a route that meets one or more first criteria, then partitioning the route into segments, and then
associating each POI of the set of POIs for the route to each segment;
instead a route may be partitioned into segments and then, for each segment, a set of POIs along each segment of the route is determined that meets one or more first criteria (such a set of POIs for each segment inherently being associated with its respective segment).

In block 104, each POI is ranked, wherein the ranking is based at least in part on one or more second criteria 900. In this regard, the POIs of the first set of POIs 300 of the route may be ranked/ordered/sorted/prioritised in accordance with a second criteria.

The ranking of POIs based on the second criteria may comprise ranking/ordering/sorting/ prioritising the POIs based on whether, or the degree to which, the POI has one or more characteristic that matches (or are close to) particular one or more characteristics/attributes stipulated in the second criteria.

The one or more second criteria may be:
one or more criteria to be met by POIs of the second subset of POIs;
user specified, based at least in part on a user input;
based at least in part on a determined context; and
based at least in part on a pre-determined preference of a user;
based at least in part on a user's history; and
predetermined.

In some examples, in effect, whilst the first criteria 500 (which serves as matching/filtering criteria for POIs) of block 101 may be considered to be "hard" criteria, i.e. criteria that must be met, the second criteria (which serves as ranking criteria for POIs) of block 104 may be considered as "soft criteria" for which it is not mandatory to meet, but which it would be preferred to be met. In this regard, the second criteria may relate to POI characteristics/attributes that it would be preferred, but not mandatory, for a POI to have.

The ranking of POIs may be based at least in part on one or more of:
a distance to the POI from a point of a segment that is associated with the respective POI (e.g. a start or end point of respective segment, a nearest point on the respective segment, an optimal branching off point on the respective segment for a detour (sub-route) from the respective segment to the POI);
an estimated amount of time to travel to the POI from a point of a segment that is associated with the respective POI; or
a detour cost for the POI, wherein the detour cost for the POI is indicative of an estimated cost to traverse a second route/sub-route, from a point on a segment that is associated with the respective POI, to the respective POI (it is to be appreciated that the "cost" could be: a spatial cost (distance), a temporal cost (time), as well as other types of costs not least such as an amount of fuel, electricity/charge required to travel to the POI).

By way of a non-limiting example, the second criteria may relate to POI characteristics/attributes such as: prices, opening times, reviews/scores, distance from route, estimated travel time from route, scenicity ...).

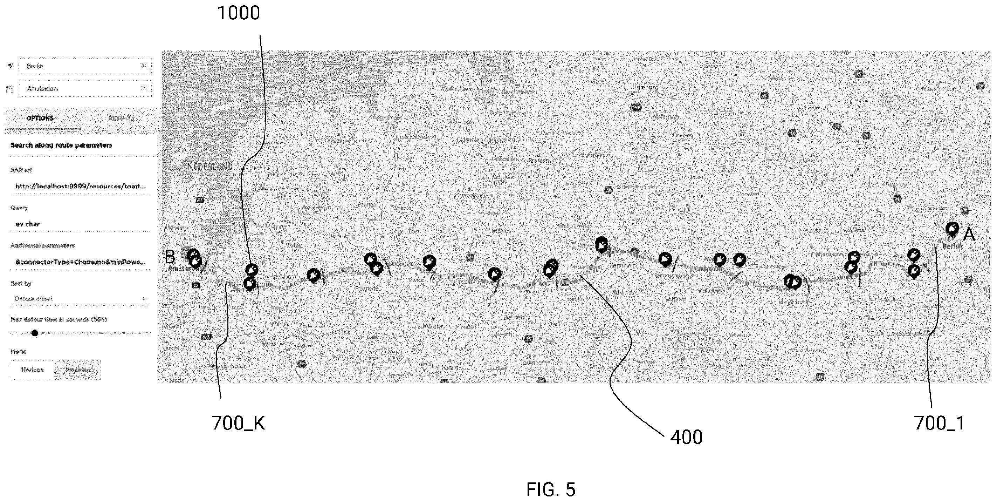

In block 105, for each segment, a threshold number N of the highest ranking POIs associated with the respective segment are selected. The number N essentially dictates the number of POI's selected for each segment. Each segment may have its own value of N (i.e. the value of N may differ for each segment). Each segment may have its own N value. As will be discussed in the below with respect to Fig. 5, the parameter N may be a fixed value for a given segment and it may be referred to as a 'fixed-size priority queue', such as a fixed-size priority queue of size N.

In some examples, POIs are iteratively removed from the first or second set until a total number of POIs in the first or second subset meets a threshold number of POIs, so that a number of desired results/POIs (e.g. N) is obtained.

In some examples, a total number of POIs in the second set of POIs is reduced/limited to the threshold number of POIs by iteratively removing one or more POIs from the second set of POIs based at least in part on:
a respective POI being associated with a segment that has the most POIs associated therewith, and
a ranking of the respective POI.

In block 106, a second set of one or more POIs 1000 is generated is generated based at least in part on the selected POIs. In this regard, the selected POIs (of which there are N per segment) form the second set of POIs 1000 for the route. The second set of POIs 1000 is hence a subset of the first set of POIs 300.

Advantageously, examples of the disclosure may thereby provide an improved determination/identification of POIs for a route - namely the second set of POIs 1000 for the route -whose distribution along the route can not only be optimised (for instance so as to have a distance from one POI to another that does not exceed a pre-determined threshold [e.g. a range or distance budget] but which also meet both a first criteria as well as a second criteria.

In some examples, following step 103's association of each POI of the first set of POIs 300 with one of the segments 700 of the route thereby forming sets of POIs 800 for the route segments 700, the number of POIs per set 800 may be capped/limited to a threshold number, e.g. the above discussed N value / "fixed-size priority queue". In this regard, the sets of POIs 800 may be adjusted to form adjusted sets of POIs 800' wherein each adjusted sets of POIs 800' has a maximum of N POIs therein. Accordingly, if a route were split into K segments, the maximum number of POIs across all of the segments would be capped/limited to K*N.

In some examples, block 102's partitioning of the route into a plurality of segments may be performed prior to, or as part of, block 101's determining of a first set of POIs 300 along the route that meet one or more first criteria. In which case, block 101's determination could comprise determining, for each segment, a set of POIs 800 along each segment that meet one or more first criteria. Moreover, such determining may be performed so that the number of POIs per set of POIs for each segment may be capped/limited to a threshold number, e.g. the above discussed N value / fixed-size priority queue. In this regard, each set of POIs for each segment has a maximum of N POIs therein, thereby forming and adjusted/capped set of POIs 800' for each segment. Accordingly, if a route were split into K segments, the maximum number of POIs across all of the segments would be capped/limited to K*N.

In some examples, additional information is determined for one or more/a subset of the first set of POIs. In this regard, additional information may be determined for each POI of each adjusted set of POIs 800' for each segment. Since the number of POIs in each adjusted sets of POIs 800' can be capped/limited, this reduces the number of POIs for which additional information is to be determined.

The determination of additional information of POIs in each adjusted set of POIs 800' may comprise:
calculating information related to the POIs, e.g. calculating: routes, travel distances and travel times to reach the POIs from the route 400 (i.e. calculating detour routes,
detour distances and detour times to the POIs);
obtaining information on the POIs (e.g. performing search(es) on additional databases, on the internet for information on the POIs); and/or
determining characteristics/attributes associated with each POI, wherein such characteristics/attributes correspond to those used in the second criteria (i.e. characteristics/attributes used for the ranking/ranking criteria of block 104).

Advantageously, by performing a first execution phase of identifying POIs matching a first criteria and reducing/limiting the number of such POIs per segment, this enables a determination/search for additional information for the reduced/limited number POIs to be conducted wherein such additional information determined/uncovered can then be used to perform a second execution phase which comprises identifying POIs matching a second criteria, wherein the second criteria is based on the additional information.

By way of an example, a first criteria may be POIs that have an attribute of being an EV charging station. A digital map or repository of POI map data may comprise such attribute data. However, a second criteria may be a price per kWh (or number of charging bays or current availability of charging bays) wherein such dynamic information and additional attribute details are not stored in the digital map or the POI map data repository. Accordingly, exemplary embodiments enable a search to be made for such additional information so that an evaluation of the second criteria can be carried out.

In some examples, at least a portion of the second set of POIs may be:
rendered, along with at least a portion of the route, on a digital map used for a route calculation (e.g. to modify the route to include a detour to a POI of the second set of POIs);
used to modifying the route to include one or more intermediate waypoints, wherein the intermediate waypoints comprise one or more POIs of the second set of POIs; or
used to modify the route to include, for at least one of the segments, at least one POI from the second set of the POIs as at least one waypoint.

Fig. 4 schematically shows an example of a second set 1000 of POIs wherein, for each segment, only a single highest ranked POI of the set of POIs 800 (or 800') for the respective segment was selected for each segment - i.e. N=1 (wherein, in this example, the POIs are all petrol stations and the ranking was based on second criteria which were based on: proximity of POI to its segment's end point, and cheapest fuel price).

In the example of Fig. 4, with N=1, there is only a single POI per segment, i.e. POIs 1000_1, 1000_2 and 1000_3 associated with Seg1, Seg2 and Seg3 respectively. In this regard, it is to be appreciated that POI 1000_1 can be considered to be a subset of the set of POIs 800_1 of Seg1. Likewise, POI 1000_2 can be considered to be a subset of the set of POIs 800_2 of Seg2, and POI 1000_3 can be considered to be a subset of the set of POIs 800_3 of Seg3.

The now follows a discussion of an example embodiment of the present disclosure for providing range-sensitive SAR. The range-sensitive SAR method/algorithm discussed below may exploit information received from a user (e.g. driver of a vehicle planning/undergoing a journey along a route) as well as from a client system that holds contextual information about the user. The range-sensitive SAR may provide optimally uniformly spread POIs along the route.

In the context of the discussion of the example embodiment, the following terms may have the following meanings:
- Range: A maximum distance (in kilometres) that a user can travel to reach an intermediate stop/location of interest - i.e. POI - during a journey along a route
- SAR: Search Along Route. A SAR allows a user to find POIs along a preselected/predetermined route
- Detour: A sub-route exiting a main route that may be taken to reach a POI near the main route
- Detour Point, Detour Offset: A latitude-longitude position on a specified route from where a vehicle must leave the route to reach a desired intermediate POI along the detour
- Detour Distance: A distance along a detour to the POI plus a distance back to join a main route
- POI: Point of Interest, intermediate stop/location of interest, with a unique association to a Category/Type (for example an EV charging station or a restaurant or a hotel)
- Corridor: A route along with a desired "width" for each segment of the route that acts as a first-phase geometry filter to limit a number of candidate results/POIs that will be ranked / returned.
- Waypoint: A position selected by the user as a must-

The range-sensitive SAR method/algorithm, which may be implemented via a SAR service or an application on a client device (e.g. car, smartphone, dashboard device etc.), has the following inputs:
1. a route geometry, e.g. including a line string and corridor width, for a route of length "L".
   Typically this may be obtained by an on-device software (e.g. a car dashboard navigation or a navigation application) as a result of an action taken by a user to select a route suggested by a routing service.
2. a current position (optional)
   This may be obtained implicitly via fine (e.g. GPS based) and/or course (e.g. IP based) location data sensed by the user's device (e.g. car, smartphone, dashboard device etc.) that the user agrees to share with the application.
3. a range "R" in kilometres smaller than the length "L" of the route
   This may be obtained as a result of a user action, such as tapping a category icon (e.g. Charging Station) combined with device configuration (e.g. nominal/predicted electric vehicle range for a particular make/model of a car). Additionally or alternatively, it may be inferred by the SAR service when the user's intent is recognized from their textual/speech (language) input as well as current/prespecified/predicted conditions (time of day, weather, etc.). It may also be explicitly provided by the user (e.g. "find me coffee every 250 kilometres")
4. a matching criteria, (categories, brands, attribute filters, free-text query)
   Some criteria may be obtained as a result of explicit user input (e.g. tapping a category icon, typing a keyword, speaking a known concept e.g. "lunch"). Other criteria, e.g. attribute filters, may come from device/user constraints preconfigured on the device (e.g. EV connector type / fuel type(s), accessibility constraints, etc)
5. a second phase matching criteria, (e.g. maxDetourTime)
   This may be inferred by the SAR service from an effective range (see e.g. input 3.) and/or the user's selected waypoints that constrain valid routes (a route may be valid for a user's request containing waypoints if and only if the route passes through each of the waypoints)
6. a ranking criteria (RC), determining the "quality" of a result given the request
   Some ranking criteria may be inferred from recognized user intent (rank restaurants by popularity, restrooms by distance). Some ranking criteria may be inferred from user history/preferences (visited/preferred brands, cuisines). A default ranking criteria may be configured in the SAR service.
7. a number of results desired (N)
   Typically this may be preconfigured in the client application that the user interacts with. It may be overridden by user actions (e.g. such as forced scrolling).

### Execution Phase 1

Route-segments are built/generated from a pre-selected/predetermined route by discarding a section of the route "behind" the user's current position (if specified) and then "cutting" the remaining route every 'Range' kilometres along its length. This thereby creates "K" route segments (see FIG. 5).

Fig. 5 schematically shows an example of a route 400 from A to B, wherein the route has been split into K segments 700 along with a set of POIs 1000 that have been determined, in accordance with the range-sensitive SAR method/algorithm and its three execution phases discussed below, so as to be optimally uniformly spread out along the route.

The number of segments (K) can be derived from the total route length (L) and the range (R): namely it is the ratio L/R, rounded up, i.e. K = ceil(L/R).

Each route segment is associated with its own fixed-size priority queue of size N, which maintains any results pushed to it in an order imposed by a ranking criteria (RC). For all results/POIs within a corridor and which satisfy the matching criteria, the route segment the results/POIs belong to is identified and the results/POIs are pushed to the corresponding priority queue for the identified route segment.

### Sequence of steps

1. Compute a length (L) of an entire input route
2. Transform the input route into a corridor geometry
3. Construct a search engine query (including the corridor geometry as a filter) appropriate for input
4. Construct a mapping consisting of K corridor-segments, each of length R (except possibly the last segment which may have any size <= R). Each corridor-segment is associated with its own priority queue of size N to keep an accumulated maximum of the top N results/POIs (as determined by ranking criteria RC) within that corridor segment.
5. Execute the search engine query and distribute/group each resulting hit/POI into its corresponding corridor-segment's priority queue
6. Retain the grouped results/POIs for the next execution phase

As a result of phase 1, a maximum of K*N distinct results/POIs may be collected across all segment-priority-queues.

### Execution Phase 2

All collected results/POIs (K*N of them) are enriched with external information (e.g. calculation of detour-distance/detour-time to POIs).

Second phase matching criteria are applied to each result/POI. Only matching results/POIs are retained.

### Execution Phase 3

If the number of results/POIs collected after phase 2 is <=N, all results/POIs are returned. Otherwise, a non-empty segment-priority-queue (Q) with the largest number of results in it is found and the process is repeated while remaining results > N or Q has only one result left. The worst result/POI (i.e. with respect to RC) is removed from Q.

All remaining results/POIs are returned.

### Inferring Default Range and Ranking Criteria (when not specified)

POI Categories may capture a users' aggregate conceptual model of how they think of discovering POIs. Categories implicitly define an attribute schema for a POI of the respective category. They are also strongly associated with ranking criteria. For example, EV Charging Stations may have matching attributes such as connector type, voltage; as well as rank-influencing attributes like pricing, power-level, etc. Restaurants may have matching attributes such as cuisine, average serving time; as well as rank-influencing attributes such as pricing, ratings / popularity etc.

Therefore, inferring a category from a user query by lexical means (approximate name/synonym matches) as well as semantic means (knowledge graphs, language models, semantic embeddings) can give provide rich information about a default range tolerance and ranking criteria.

Advantageously, the above-described range-sensitive SAR method/algorithm exposes a notion of range as specifiable by a client/user or inferable. Specifying/inferring a range may lead to an adaptive and optimal spread of results/POIs along the route.

The blocks illustrated in Fig. 1 and the various steps and functionality described above represent actions in a method, functionality performed by an apparatus, and/or sections of instructions/code in the computer program.

It will be understood that each block and combinations of blocks illustrated in Fig. 1, as well as the further functions described above, can be implemented by various means, such as hardware, firmware, and/or software including one or more computer program instructions. For example, one or more of the functions described below can be performed by a duly configured apparatus (such as a server or navigation device). One or more of the functions described below can be embodied by a duly configured computer program (such as a computer program comprising computer program instructions which embody the functions described below and which can be stored by a memory storage device and performed by a processor).

As will be appreciated, any such computer program instructions can be loaded onto a computer or other programmable apparatus (i.e. hardware) to produce a machine, such that the instructions when performed on the programmable apparatus create means for implementing the functions specified in the blocks. These computer program instructions can also be stored in a computer-readable medium that can direct a programmable apparatus to function in a particular manner, such that the instructions stored in the computer-readable memory produce an article of manufacture including instruction means which implement the function specified in the blocks. The computer program instructions can also be loaded onto a programmable apparatus to cause a series of operational actions to be performed on the programmable apparatus to produce a computer-implemented process such that the instructions which are performed on the programmable apparatus provide actions for implementing the functions specified in the blocks.

Various, but not necessarily all, examples of the present disclosure can take the form of a method, an apparatus, or a computer program. Accordingly, various, but not necessarily all, examples can be implemented in hardware, software or a combination of hardware and software.

Various, but not necessarily all, examples of the present disclosure are described using flowchart illustrations and schematic block diagrams. It will be understood that each block (of the flowchart illustrations and block diagrams), and combinations of blocks, can be implemented by computer program instructions of a computer program. These program instructions can be provided to one or more processor(s), processing circuitry or controller(s) such that the instructions which execute on the same create means for causing implementing the functions specified in the block or blocks, i.e. such that the method can be computer implemented. The computer program instructions can be executed by the processor(s) to cause a series of operational block/steps/actions to be performed by the processor(s) to produce a computer implemented process such that the instructions which execute on the processor(s) provide block/steps for implementing the functions specified in the block or blocks.

Accordingly, the blocks support: combinations of means for performing the specified functions; combinations of actions for performing the specified functions; and computer program instructions/algorithm for performing the specified functions. It will also be understood that each block, and combinations of blocks, can be implemented by special purpose hardware-based systems which perform the specified functions or actions, or combinations of special purpose hardware and computer program instructions.

Various, but not necessarily all, examples of the present disclosure provide both a method and corresponding apparatus comprising various modules, means or circuitry that provide the functionality for performing/applying the actions of the method. The modules, means or circuitry can be implemented as hardware, or can be implemented as software or firmware to be performed by a computer processor. In the case of firmware or software, examples of the present disclosure can be provided as a computer program product including a computer readable storage structure embodying computer program instructions (i.e. the software or firmware) thereon for performing by the computer processor.

Fig. 6 schematically illustrates a block diagram of an apparatus 1 for performing the methods, processes, and procedures described in the present disclosure (not least such as those illustrated in Fig. 1). In this regard the apparatus may be, not least for example, a server or a navigation device. The component blocks of Fig. 6 are functional and the functions described can be performed by a single physical entity.

The apparatus comprises a controller 7, which could be provided within a device such as a server or a navigation device.

The controller 6 can be embodied by a computing device, not least such as those mentioned above. In some, but not necessarily all examples, the apparatus can be embodied as a chip, chip set, circuitry or module, i.e. for use in any of the foregoing. As used here 'module' refers to a unit or apparatus that excludes certain parts/components that would be added by an end manufacturer or a user.

Implementation of the controller 6 can be as controller circuitry. The controller 6 can be implemented in hardware alone, have certain aspects in software including firmware alone or can be a combination of hardware and software (including firmware).

The controller 6 can be implemented using instructions that enable hardware functionality, for example, by using executable instructions of a computer program 4 in a general-purpose or special-purpose processor 2 that can be stored on a computer readable storage medium 3, for example memory, or disk etc, to be executed by such a processor 2.

The processor 2 is configured to read from and write to the memory 3. The processor 2 can also comprise an output interface via which data and/or commands are output by the processor 2 and an input interface via which data and/or commands are input to the processor 2. The apparatus can be coupled to or comprise one or more other components 5 (not least for example one or more of: a data communication interface, input/output user interface elements and/or other modules/devices/components for inputting and outputting data/commands).

The memory 3 stores instructions such as a computer program 4 comprising such instructions (e.g. computer program instructions/code) that controls the operation of the apparatus 1 when loaded into the processor 2. The instructions of the computer program 4, provide the logic and routines that enables the apparatus to perform the methods, processes and procedures described in the present disclosure (not least such as those illustrated in Fig. 1 and discussed above). The processor 2, by reading the memory 3, is able to load and execute the computer program 4.

The instructions may be comprised in a computer program, a non-transitory computer readable medium, a computer program product, a machine readable medium. The term "non-transitory," as used herein, is a limitation of the medium itself (i.e. tangible, not a signal) as opposed to a limitation on data storage persistency (e.g. RAM vs. ROM). In some but not necessarily all examples, the computer program instructions may be distributed over more than one computer program.

Although the memory 3 is illustrated as a single component/circuitry it can be implemented as one or more separate components/circuitry some or all of which can be integrated/removable and/or can provide permanent/semi-permanent/ dynamic/cached storage.

Although the processor 2 is illustrated as a single component/circuitry it can be implemented as one or more separate components/circuitry some or all of which can be integrated/removable. The processor 2 can be a single core or multi-core processor.

The apparatus can include one or more components for effecting the methods, processes and procedures described in the present disclosure (not least such as those illustrated in Fig. 1 as well as those discussed above). It is contemplated that the functions of these components can be combined in one or more components or performed by other components of equivalent functionality. The description of a function should additionally be considered to also disclose any means suitable for performing that function.

Where a structural feature has been described, it can be replaced by means for performing one or more of the functions of the structural feature whether that function or those functions are explicitly or implicitly described.

Although examples of the apparatus have been described above in terms of comprising various components, it should be understood that the components can be embodied as or otherwise controlled by a corresponding controller or circuitry such as one or more processing elements or processors of the apparatus. In this regard, each of the components described above can be one or more of any device, means or circuitry embodied in hardware, software or a combination of hardware and software that is configured to perform the corresponding functions of the respective components as described above.

The apparatus can, for example, be a server device, a client device, a mobile cellular telephone, an in-vehicle integrated device, a wireless communications device, a hand-portable electronic device etc. The apparatus can be embodied by a computing device, not least such as those mentioned above. However, in some examples, the apparatus can be embodied as a chip, chip set, circuitry or module, i.e. for use in any of the foregoing.

In some examples, the apparatus comprises:
at least one processor 12; and
at least one memory 13 storing instructions that, when executed by the at least one processor 12, cause the apparatus to perform
   determining a first set of points of interest, POIs, along a route, that meet one or more first criteria;
   partitioning the route into a plurality of segments;
   associating each one or more POIs of the first set of POIs with one of the plurality of segments of the route;
   ranking each one or more POIs of the first set of POIs, wherein the ranking is based at least in part on one or more second criteria;
   selecting, for each segment, a threshold number of the highest ranking POIs associated with the respective segment; and
   generating a second set of POIs based at least in part on the selected POIs.

Fig. 7 illustrates a computer program 4 which may be conveyed via a delivery mechanism 7. The delivery mechanism 7 can be any suitable delivery mechanism, for example, a machine readable medium, a computer-readable medium, a non-transitory computer-readable storage medium, a computer program product, a memory device, a solid-state memory, a record medium such as a Compact Disc Read-Only Memory (CD-ROM) or a Digital Versatile Disc (DVD) or an article of manufacture that comprises or tangibly embodies the computer program 4. The delivery mechanism can be a signal configured to reliably transfer the computer program. An apparatus can receive, propagate or transmit the computer program as a computer data signal.

In certain examples of the present disclosure, there is provided a computer program comprising instructions, which when executed by an apparatus, cause the apparatus to perform:
determining a first set of points of interest, POIs, along a route, that meet one or more first criteria;
partitioning the route into a plurality of segments;
associating each one or more POIs of the first set of POIs with one of the plurality of segments of the route;
ranking each one or more POIs of the first set of POIs, wherein the ranking is based at least in part on one or more second criteria;
selecting, for each segment, a threshold number of the highest ranking POIs associated with the respective segment; and
generating a second set of POIs based at least in part on the selected POIs.

References to 'computer program', 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other devices. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

Although specific terms are employed herein, they are used in a generic and descriptive sense only and not for purposes of limitation.

Features described in the preceding description can be used in combinations other than the combinations explicitly described.

Although functions have been described with reference to certain features, those functions can be performable by other features whether described or not.

Although features have been described with reference to certain examples, those features can also be present in other examples whether described or not. Accordingly, features described in relation to one example/aspect of the disclosure can include any or all of the features described in relation to another example/aspect of the disclosure, and vice versa, to the extent that they are not mutually inconsistent.

Although various examples of the present disclosure have been described in the preceding paragraphs, it should be appreciated that modifications to the examples given can be made without departing from the scope as set out in the claims.

The term 'comprise' is used in this document with an inclusive not an exclusive meaning. That is any reference to X comprising Y indicates that X can comprise only one Y or can comprise more than one Y. If it is intended to use 'comprise' with an exclusive meaning then it will be made clear in the context by referring to "comprising only one ..." or by using "consisting".

As used herein, the term "determine/determining" (and grammatical variants thereof) can include, not least: calculating, computing, processing, deriving, measuring, investigating, identifying, looking up (for example, looking up in a table, a database or another data structure), ascertaining and the like. Also, "determining" can include receiving (for example, receiving information), retrieving/accessing (for example, retrieving/accessing data in a memory), obtaining and the like. Also, " determine/determining" can include resolving, selecting, choosing, establishing, inferring and the like.

As used herein, a description of an action should also be considered to disclose enabling, and/or causing, and/or controlling that action. For example, a description of transmitting information should also be considered to disclose enabling, and/or causing, and/or controlling transmitting information. Similarly, for example, a description of an apparatus transmitting information should also be considered to disclose at least one means or controller of the apparatus enabling, and/or causing, and/or controlling the apparatus to transmit the information."

The term "means" as used in the description and in the claims may refer to one or more individual elements configured to perform the corresponding recited functionality or functionalities, or it may refer to several elements that perform such functionality or functionalities. Furthermore, several functionalities recited in the claims may be performed by the same individual means or the same combination of means. For example performing such functionality or functionalities may be caused in an apparatus by a processor that executes instructions stored in a memory of the apparatus.

References to a parameter or attribute, or value of a parameter or attribute, should be understood to refer to "data indicative of", "data defining" or "data representative of" the relevant parameter/parameter value if not explicitly stated (unless the context demands otherwise). The data may be in any way indicative of the relevant parameter/attribute and/or its value, and may be directly or indirectly indicative thereof.

In this description, reference has been made to various examples. The description of features or functions in relation to an example indicates that those features or functions are present in that example. The use of the term 'example' or 'for example', 'can' or 'may' in the text denotes, whether explicitly stated or not, that such features or functions are present in at least the described example, whether described as an example or not, and that they can be, but are not necessarily, present in some or all other examples. Thus 'example', 'for example', 'can' or 'may' refers to a particular instance in a class of examples. A property of the instance can be a property of only that instance or a property of the class or a property of a sub-class of the class that includes some but not all of the instances in the class.

In this description, references to "a/an/the" [feature, element, component, means ...] are used with an inclusive not an exclusive meaning and are to be interpreted as "at least one" [feature, element, component, means ...] unless explicitly stated otherwise. That is any reference to X comprising a/the Y indicates that X can comprise only one Y or can comprise more than one Y unless the context clearly indicates the contrary. If it is intended to use 'a' or 'the' with an exclusive meaning then it will be made clear in the context. In some circumstances the use of 'at least one' or 'one or more' can be used to emphasise an inclusive meaning but the absence of these terms should not be taken to infer any exclusive meaning. As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

The presence of a feature (or combination of features) in a claim is a reference to that feature (or combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described. In the above description, the apparatus described can alternatively or in addition comprise an apparatus which in some other examples comprises a distributed system of apparatus, for example, a client/server apparatus system. In examples where an apparatus provided forms (or a method is implemented as) a distributed system, each apparatus forming a component and/or part of the system provides (or implements) one or more features which collectively implement an example of the present disclosure. In some examples, an apparatus is re-configured by an entity other than its initial manufacturer to implement an example of the present disclosure by being provided with additional software, for example by a user downloading such software, which when executed causes the apparatus to implement an example of the present disclosure (such implementation being either entirely by the apparatus or as part of a system of apparatus as mentioned hereinabove).

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavouring in the foregoing specification to draw attention to those features of examples of the present disclosure believed to be of particular importance it should be understood that the applicant claims protection in respect of any patentable feature or combination of features hereinbefore referred to and/or shown in the drawings whether or not particular emphasis has been placed thereon.

The examples of the present disclosure and the accompanying claims can be suitably combined in any manner apparent to one of ordinary skill in the art. Separate references to an "example", "in some examples" and/or the like in the description do not necessarily refer to the same example and are also not mutually exclusive unless so stated and/or except as will be readily apparent to those skilled in the art from the description. For instance, a feature, structure, process, block, step, action, or the like described in one example may also be included in other examples, but is not necessarily included.

Each and every claim is incorporated as further disclosure into the specification and the claims are embodiment(s) of the present disclosure. Further, while the claims herein are provided as comprising specific dependencies, it is contemplated that any claims can depend from any other claims and that to the extent that any alternative embodiments can result from combining, integrating, and/or omitting features of the various claims and/or changing dependencies of claims, any such alternative embodiments and their equivalents are also within the scope of the disclosure.

## Claims

1. A computer-implemented method for determining points of interest, POIs, along a route, the method comprising:
determining a first set of POIs, along a route, that meet one or more first criteria;
partitioning the route into a plurality of segments;
associating each one or more POIs of the first set of POIs with one of the plurality of segments of the route;
ranking each one or more POIs of the first set of POIs, wherein the ranking is based at least in part on one or more second criteria;
selecting, for each segment, a threshold number of the highest ranking POIs associated with the respective segment; and
generating a second set of POIs based at least in part on the selected POIs.

2. The method of any previous claim, wherein determining the first set of POIs along the route that meet one or more first criteria comprises:
identifying POIs, positioned within a threshold distance from the route, that meet the one or more first criteria.

3. The method of any previous claim, wherein determining the first set of POIs along the route that meet one or more first criteria comprises:
inputting the one or more first criteria as a search query input to a Search Along Route, SAR, service for identifying POIs, along the route, that meet the one or more first criteria.

4. The method of any previous claim, wherein at least one of the one or more first criteria is at least one of:
based at least in part on a user input;
based at least in part on a context; or
predetermined.

5. The method of any previous claim, wherein at least one of the one or more first criteria is at least one of:
a POI category; or
a POI attribute.

6. The method of any previous claim, wherein each segment has a segment length, and wherein the lengths of the segments are at least one of:
predetermined;
substantially uniform;
user defined;
based at least in part on a user input;
based at least in part on a determined context; or
based at least in part on the one or more first criteria.

7. The method of any previous claim, wherein each segment has a segment length, and wherein the lengths of the segments are based at least in part on a range parameter, wherein the range parameter is indicative of at least one of:
a target threshold distance between POIs of the second set of POIs;
a maximum range of a vehicle; or
a target threshold estimated journey time for traversing between POIs of the second set of POIs.

8. The method of any previous claim, further comprising determining additional information on:
one or more POIs of the first set of POIs, and/or
a subset of the first set of POIs.

9. The method of any previous claim, wherein at least one of the one or more second criteria is at least one of:
one or more criteria to be met by POIs of the second set of POIs;
user specified;
based at least in part on a user input;
based at least in part on a determined context;
based at least in part on a pre-determined preference of a user;
based at least in part on a user's history; and
predetermined.

10. The method of any previous claim, wherein the ranking of a POI is based at least in part on at least one of:
a distance to the POI from a point of a segment that is associated with the respective POI;
an estimated amount of time to travel to the POI from a point of a segment that is associated with the respective POI; or
a detour cost for the POI, wherein the detour cost for the POI is indicative of an estimated cost to traverse a second route, from a point of a segment that is associated with the respective POI, to the respective POI.

11. The method of any previous claim, further comprising reducing a total number of POIs in the second set of POIs, wherein reducing the total number of POIs comprises iteratively removing a POI from the second set of POIs based at least in part on:
the POI being associated with a segment that has the most POIs associated therewith, and
a ranking of the POI.

12. The method of any previous claim, wherein one or more POIs are iteratively removed from the first or second set until a total number of POIs in the first or second set meets a threshold number of POIs.

13. The method of any previous claim, further comprising at least one of:
rendering at least a portion of the second set of POIs, and optionally at least a portion of the route, on a digital map;
using at least a portion of the second set of POIs for a route calculation;
modifying the route to include one or more intermediate waypoints, wherein the intermediate waypoints comprise one or more POIs of the second set of POIs; or
modifying the route to include, for at least one of the segments, at least one POI from the second set of the POIs as at least one waypoint.

14. An apparatus comprising means for performing the method of any of the previous claims.

15. A computer program, optionally embodied on a computer-readable medium, comprising instructions which, when the program is executed by a computer, cause the computer to carry out the method of any of claims 1 to 13.
